# FASCICULE DE BREVET EUROPEEN

(11) **EP 4 182 188 B1**
(45) Date de publication et mention de la délivrance du brevet: **28.08.2024**
(21) Numéro de dépôt: 21758398.8
(22) Date de dépôt: 06.07.2021
(51) Int. Cl.: B60R 11/00

(54) **SUPPORT D'APPAREIL PORTATIF COULISSANT A TENU AMELIOREE**
STÜTZE MIT VERBESSERTER FESTIGKEIT FÜR EINE VERSCHIEBBARE TRAGBARE VORRICHTUNG
SLIDING PORTABLE DEVICE SUPPORT WITH IMPROVED STRENGTH

(30) Priorité: 15.07.2020 FR 2007429
(43) Date de publication de la demande: 24.05.2023
(73) Titulaire: Stellantis Auto SAS, 78300 Poissy (FR)
(72) Inventeur: PORET, Benoit, 78117 CHATEAUFORT (FR)
(86) Numéro de dépôt international: PCT/FR2021/051239
(87) Numéro de publication internationale: WO 2022/013490

(56) Documents cités:
- EP-A1- 3 293 031
- WO-A1-2012/067029
- WO-A1-2012/114957
- FR-A1- 2 947 225
- US-A1- 2009 085 366

## Description

La présente invention concerne un support pour la fixation d'un appareil électronique portatif sur une planche de bord d'un véhicule automobile, un ensemble pour la fixation d'un tel appareil, une planche de bord comprenant un tel support, et un véhicule automobile comprenant ledit support, ledit ensemble ou ladite planche de bord.

L'utilisation d'appareils électroniques portatifs, comme par exemple des tablettes numériques et/ou des smartphones, est aujourd'hui généralisée. Dès lors, dans un véhicule automobile, il est intéressant que ces appareils puissent être utilisés avec sécurité et de manière confortable, notamment pour le passager avant du véhicule.

Le document US20090058366 décrit un dispositif de support pour appareil électronique portatif sur une planche de bord d'un véhicule automobile. Un évidement est aménagé dans la planche de bord, et reçoit le dispositif de support, escamotable entre une position rangée dans l'évidement et une position d'utilisation où le support est déployé en dehors de l'évidement de sorte à présenter une zone pouvant accueillir l'appareil électronique. Le dispositif de support comprend un boîtier installé dans l'évidement de la planche de bord, et un support sous la forme d'un tiroir coulissant entre une position rangée dans le boîtier et une position d'utilisation dans laquelle le support est déployé en dehors du boîtier. Le support coulisse à travers une ouverture du boîtier, les bords du support étant guidé par des rails de guidage.

Le dispositif de support permet ainsi au passager avant du véhicule de poser un appareil électronique portatif sur la planche de bord. Le document WO2012/114957A1 divulgue un support mobile selon le préambule de la revendication 1.

L'inconvénient d'un tel dispositif de support pour appareils électroniques portatif est lorsque le véhicule roule, le support va vibrer à cause des vibrations remontées par le véhicule, d'autant plus si un appareil électronique est posé sur le support à cause du poids dudit appareil électronique. Ces vibrations seront particulièrement gênantes pour un passager souhaitant regarder l'écran de l'appareil électronique posé sur le support.

L'objectif de l'invention est de remédier à ces inconvénients. En particulier, l'un des buts de l'invention est de proposer un dispositif pour supporter un appareil électronique portatif escamotable dans un véhicule, qui améliore le confort d'utilisation de l'appareil électronique portatif lorsque celui-ci est disposé sur le dispositif. Plus particulièrement, un des objectifs est de réduire les vibrations d'un appareil électronique portatif disposer sur le dispositif qui le supporte.

Ce but est atteint selon l'invention grâce à un support mobile pour la fixation d'un appareil électronique portatif dans un véhicule automobile, comprenant une platine comprenant une interface de réception apte à recevoir l'appareil électronique portatif deux coulisses, une première et une deuxième coulisse, fixées d'un côté sur la platine et destinées à être fixées de l'autre côté à un élément de l'habitacle du véhicule, de préférence dans une cavité de l'élément de l'habitacle, de manière à permettre un coulissement du support par rapport à audit élément de l'habitacle dans une direction X, entre une position escamotée et une position déployée, remarquable en ce que la première coulisse et la deuxième coulisse s'étendent chacune respectivement dans un premier plan d'extension et un deuxième plan d'extension, les deux plans d'extensions et les deux coulisses étant sensiblement parallèles à l'axe X, les plans d'extensions et étant non parallèles entre eux.

Ainsi en plaçant dans le véhicule le support de sorte que l'axe X soit sensiblement parallèle à l'axe longitudinal du véhicule lorsque le support est installé dans le véhicule, c'est-à-dire au plus avec un angle d'environ 10° par rapport à cet axe du véhicule, et avec les plans d'extension se croisant sous le support, c'est-à-dire entre le support et le plancher du véhicule lorsque le support est installé dans le véhicule, les efforts issus du poids de la platine équipée de l'appareil nomade portatif sont repris de manière efficace par les coulisses car ces efforts ne sont pas parallèles à au moins l'une des coulisses, de préférence aux deux coulisses. De plus, cette position permet d'avoir une meilleure rigidité de la liaison coulisse réalisée par les coulisses entre la platine et l'élément de l'habitacle sur lequel sont fixés les coulisses car les plans d'extension des coulisses n'étant pas parallèles, l'ensemble des deux coulisses offre une bonne inertie vis-à-vis des efforts dans les directions perpendiculaires à l'axe X. Le plan d'extension correspond au plan dans lequel la coulisse s'étend, la coulisse étant formée classiquement par des éléments de forme générale plane. Par exemple, les coulisses peuvent être formées par des éléments allongés droits de section en U dont les branches sont de petites dimensions par rapport à la base du U reliant les deux branches, le plan d'extension étant parallèle au plan formé par la base du U.

La position escamotée correspond par exemple à une position dans laquelle l'appareil portatif ne peut pas être installé, par exemple une position dans laquelle la platine est rentrée au moins en grande partie dans une cavité de l'élément de l'habitacle. La position déployée est par exemple dans ce cas une position dans laquelle la platine est davantage à l'extérieur de la cavité de sorte à permettre l'installation de l'appareil portatif.

Dans un mode de réalisation particulier de l'invention, les deux coulisses sont disposées dans un même plan parallèle à l'axe X et à un axe Y, l'axe Y étant perpendiculaire à l'axe X, et de manière symétrique par rapport à un plan médian à l'espace entre lesdites deux coulisses et perpendiculaire à l'axe Y, le plan médian étant parallèle à l'axe X et à un axe Z perpendiculaire à l'axe X et Y.

Le plan médian est donc à distance égale de chacune des 2 coulisses. Cette disposition permet d'obtenir une symétrie dans les efforts reçus par chacune des coulisses. De plus, la rigidité est accrue car cette disposition permet d'avoir une inertie des glissières élevée à la fois suivant la direction de l'axe Y et suivant la direction de l'axe Z, vis-à-vis des efforts parallèles à ces directions lorsque le véhicule roule.

Dans un mode de réalisation de l'invention, les plans d'extension forment chacun un angle entre 30° et 40° avec le plan médian.

Ainsi avantageusement, la rigidité la liaison coulisse est élevée tout en permettant un bon guidage de la platine par les coulisses. En particulier, cette disposition permet d'obtenir une raideur élevée de la liaison formée par les coulisses entre la platine et l'élément du véhicule, avec une raideur offrant un mode propre supérieur à 40 Hz, avec des coulisses classiques à coût faible

Dans un autre mode de réalisation de l'invention, le mode propre de la liaison formée par les coulisses est supérieur à 40 Hz.

Ainsi avantageusement, en rigidifiant la liaison formée par les coulisses jusqu'à réaliser un mode propre de 40 Hz, les vibrations de l'appareil électronique portatif installé sur la platine sont réduites de manière très importantes lorsque le véhicule roule et le confort d'utilisation de l'appareil portatif, en particulier de lecture d'un écran équipant l'appareil portatif, confortable.

Dans un autre mode de réalisation, chacune des coulisses est fixée sur chacun des bords latéraux de la platine, les bords latéraux étant les bords disposés de part et d'autre de la platine symétriquement par rapport au plan médian, chacun des bords latéraux comportant au moins une partie parallèle au plan d'extension de la coulisse fixée sur ledit bord, ladite partie du bord latéral correspondant à la partie sur laquelle est fixée chacune des coulisses.

L'invention porte également sur un ensemble pour la fixation d'un appareil électronique portatif dans un véhicule automobile, comprenant un support tel que décrit précédemment, et comprenant en outre un boîtier support destinée à recevoir l'appareil électronique portatif, le boîtier support comprenant une interface de fixation configurée de manière à fixer de manière réversible le boîtier support sur l'interface de réception.

Ainsi avantageusement, l'appareil électronique portatif peut être fixer et retirer du support. De plus, le boîtier support permet de fixer au support plusieurs type d'appareil portatif, et de protéger cet appareil portatif en cas de chute lors de son transport, par exemple en dehors du véhicule.

L'invention porte également sur une planche de bord de véhicule comprenant une cavité débouchant par une ouverture sur la surface extérieure de ladite planche de bord, comportant un support tel que décrit précédemment et disposé dans la cavité dans une position escamotée et en partie à l'extérieur de la cavité dans une position déployée, le support coulissant pour passer d'une position à l'autre au traverse de l'ouverture de la cavité dans la planche de bord.

Ainsi avantageusement, les passagers avant peuvent installer un appareil électronique portatif à proximité.

Dans un mode de réalisation particulier de l'invention portant sur la planche de bord, la cavité est encadrée par des parois entre lesquelles coulisse la platine et les coulisses sont fixées auxdites parois de la cavité.

L'invention porte également sur un véhicule comportant une planche de bord telle que décrite précédemment, ou un support tel que décrit précédemment, ou un ensemble tel que décrit précédemment.

L'invention sera mieux comprise à la lecture de la description qui va suivre, donnée uniquement à titre d'exemple et faite en se référant aux dessins annexés, sur lesquels :
[Fig.1] représente une vue générale d'une partie d'une planche de bord située en vis-à-vis d'un passager de véhicule et qui comporte un support pour un appareil électronique portatif suivant l'invention.
[Fig.2] représente une vue détaillée en perspective du support.
[Fig. 3] représente une vue de profil du support avec un appareil électronique portatif fixé sur ledit support au moyen d'un boîtier support
[Fig. 4] est une vue en coupe du support dans un plan perpendiculaire à sa direction de coulissement.

Les dessins sont des représentations schématiques pour faciliter la compréhension de l'invention. Les composants ne sont pas forcément représentés à l'échelle. Les mêmes références correspondent aux mêmes composants d'une figure à l'autre.

### Description générale

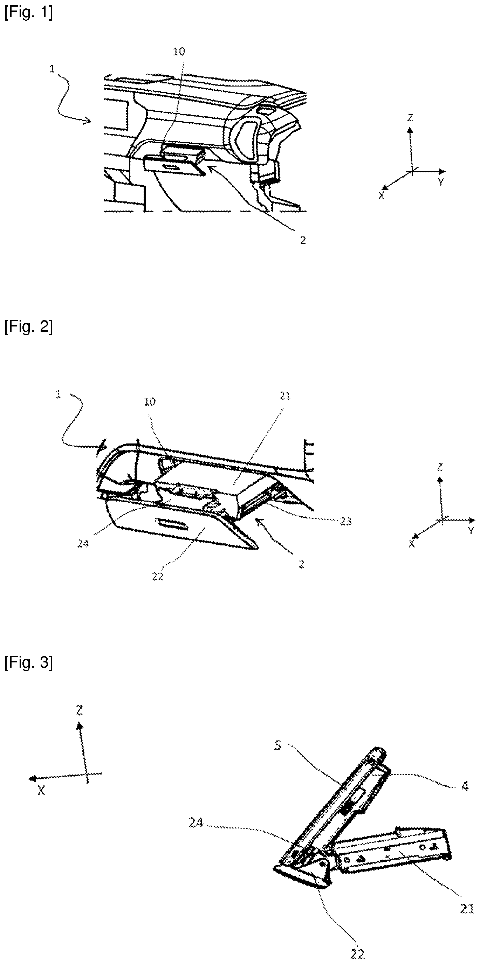

Les figures 1 et 2 illustre une partie d'une planche de bord 1 un véhicule automobile, plus particulièrement la partie de la planche de bord 1 située en vis-à-vis du passager avant du véhicule qui ne conduit pas. La planche de bord 1 comporte un support 2 destiné à recevoir un appareil électronique portatif 5 comme par exemple une tablette électronique ou encore un smartphone, comme illustré dans les figures 2 et 3. Les axes X, Y et Z sont parallèles respectivement à l'axe longitudinal, transversal et vertical du véhicule.

Le support 2 comporte une platine 21 qui coulisse dans une cavité 10 de la planche de bord 1 à l'aide de coulisses 23 fixés d'un côté à la platine 21 et de l'autre côté à la planche de bord 1, à l'intérieur de la cavité 10. La platine 21 est de forme générale parallélépipédique. Le support 2 comporte un volet mobile 22 fixé à la platine 21 par un axe de rotation autour duquel il peut pivoter. Le support 2 est par exemple placé au-dessus du rangement de vide-poche d'un véhicule disposé dans la planche de bord.

Dans une position escamotée, le support 2 est rentré à l'intérieur de la cavité 10 et seul le volet mobile 22 est visible à l'extérieur de la planche de bord 1. Dans cette position escamotée du support 2, le volet mobile 22 ferme la cavité 10 et est aligné avec la surface de la planche de bord situait autour de la cavité 10.

Dans une position déployée, le support 2 ressort de la planche de bord 1 vers le passager, en saillie de la planche de bord 1.

Le support 2 se déplace entre ces deux positions par translation en coulissant le long des coulisses 23, sensiblement parallèle à l'axe X. Le volet mobile 22 est disposé sur la partie avant de la platine 21, la partie avant de ladite platine 21 étant la partie en vis-à-vis du passager, c'est-à-dire orientée vers l'arrière du véhicule, la planche de bord 1 étant disposée devant le passager. Le support 2 se déplace donc de la position escamotée vers la position déployée en translatant en direction de l'arrière du véhicule.

La platine 21 comporte en partie avant une interface de réception 24 sur laquelle vient se placer un appareil électronique portatif 5. Cette interface de réception 24 est située à l'extrémité avant de la platine 21. Comme illustré en figure 3, l'appareil portatif 5 est fixé à la platine 21, sur l'interface de réception 24 par l'intermédiaire d'un boîtier support 4 tel qu'une coque dans laquelle est inséré l'appareil portatif 5. Le boîtier support 4 comporte une interface de fixation coopérant avec l'interface de réception 24 de la platine 21.

Lorsqu'aucun appareil portatif 5 n'est disposé sur l'interface de réception 24, le volet mobile 22 est en vis-à-vis de l'interface de réception 24, c'est-à-dire en vis-à-vis de l'extrémité avant de la platine 21. Lorsque le support 2 est en position escamotée, le volet mobile 22 cache l'interface de réception 24.

L'interface de réception 24 est sous la forme une plaque plane reliée en son centre à l'extrémité avant de la platine 21. Elle s'étend sensiblement parallèlement à l'axe transversal du véhicule, et forme un angle aigu avec un plan défini par les axes XY, orienté vers l'avant du véhicule. Ainsi, une fois installé sur l'interface de réception 24, l'appareil portatif 5 a une position dans laquelle sa partie haute est penchée vers l'avant du véhicule, permettant son utilisation et sa visualisation confortable par le passager, notamment par exemple dans le cas d'une tablette électronique avec un écran.

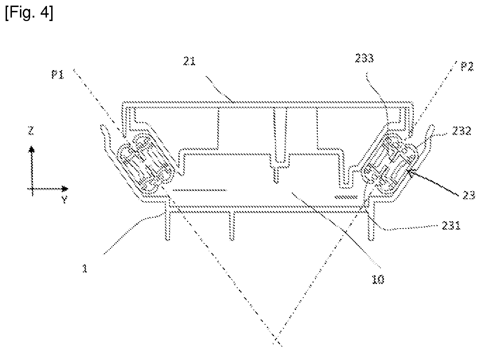

La figure 4 une vue en coupe de la platine 21 dans un plan perpendiculaire à la direction de translation de ladite platine 21, c'est-à-dire sensiblement parallèle à l'axe X. Deux coulisses 23 sont fixées sur chacun des bords latéraux de la platine 21. Les bords latéraux de la platine 21 sont les bords qui sont disposés de part et d'autre de la platine 21 dans la direction transversale Y.

Chacune des coulisses 23 est formé par deux éléments, un élément fixe 231 et un élément mobile 232. L'élément fixe 231 est fixé à la planche de bord 1 et l'élément mobile sur un bord latéral de la platine 21. Chacun des éléments fixes 231 et mobiles 232 sont sous la forme d'un profilé droit, plat et allongé, s'étendant dans un plan d'extension. L'élément fixe 231 et l'élément mobile 232 d'une même coulisse 23 sont parallèles entre eux. On nomme P1 le plan d'extension de la première coulisse 23 et P2 le plan d'extension de la deuxième coulisse 23. D'autres formes de coulisse connues de l'homme du métier sont applicables.

Les parties des bords latéraux de la platine 21 sur lesquelles les coulisses 23 se fixent ne sont pas parallèles entre-elle, mais forment un angle de sorte qu'en les prolongeant vers le bas, en se plaçant dans le référentiel du véhicule, elles se croisent. Comme illustré sur la figure 4, ces parties des bords latéraux sont donc chacun suivant un plan en biais par rapport à l'axe Z vertical, et parallèle à l'axe X, ces parties des deux bords latéraux étant symétriques par rapport au plan vertical XZ médian à l'espace entre lesdits bords latéraux, c'est-à-dire médian par rapport à l'espace entre les coulisses 23. Ces parties des bords latéraux s'étendent donc dans un plan parallèle à l'axe X et en biais par rapport à l'axe Z. Les plans d'extension des éléments fixes 231 et mobiles 232 s'étendent donc aussi parallèlement à l'axe X et en biais par rapport à l'axe Z de sorte former un V dans un plan vertical YZ, la pointe du V étant orienté vers le bas du véhicule. Autrement dit, en prolongeant les plans d'extension P1 et P2 vers le bas du véhicule, lesdits plans d'extension P1 et P2 se croisent sous la platine, entre la platine 21 et le plancher du véhicule. Cette disposition offre à la liaison entre la platine 21 et la planche de bord 1 une inertie élevée à la fois suivant la direction de l'axe Y et suivant la direction de l'axe Z. En effet, une position des coulisses 23 avec leur plan d'extension respectifs parallèle, donnerait une bonne inertie uniquement dans une direction, par exemple uniquement suivant l'axe Z mais pas suivant l'axe Y si le plan d'extension de chacun des coulisses 23 est parallèle aux axes X et Z.

Ainsi, par cette disposition, le poids de la platine 21 ne va pas être parallèle aux plans d'extensions P1 et P2 des coulisses, mais chaque élément mobile 232 va appuyer sur l'élément fixe 231 de sa coulisse respective. Cette disposition assure une rigidité optimale du support, en particulier en position déployée et équipée de l'appareil portatif 5. Ainsi, les vibrations du support équipé de l'appareil portatif 5 tel qu'une tablette électronique sont réduites. Afin d'obtenir une très bonne raideur et un guidage précis, limitant les vibrants, les plans d'extension (P1, P2) forment chacun un angle entre 30° et 40° avec le plan médian. On pourra choisir par exemple un angle de 33° qui offre une raideur optimale.

Cette disposition permet notamment d'obtenir une raideur caractérisée par un mode propre d'au moins 40 Hz, permettant de réduire les vibrations de la tablette électronique 4 fixé sur le support 2 en position déployée, et d'assurer une lecture de l'écran confortable pour le passager même lorsque le véhicule roule.

Les coulisses 23 sont de type classique. Par exemple, comme illustré en figure 3, l'élément fixe 231 et l'élément mobile 232 sont sous la forme d'un profilé dans la section est en forme de U dont l'ouverture des U se font face, et un élément intermédiaire 233 s'étant à l'intérieur de chacun des U, relié à l'élément fixe 231 est l'élément mobile 232 par une liaison glissière de manière à permettre le coulissement de l'élément mobile 232 par rapport à l'élément fixe 231.

En variante, la direction de translation de la platine (21) peut être légèrement décalée par rapport à l'axe longitudinal du véhicule, c'est à dire suivant un angle au plus de 10° par rapport à l'axe X longitudinal du véhicule, mais restant dans ce cas sensiblement parallèle à l'axe longitudinal du véhicule.

D'autres formes de coulisse connues de l'homme du métier sont applicables.

## Revendications

1. Support (2) mobile pour la fixation d'un appareil électronique portatif (5) dans un véhicule automobile, comprenant une platine (21) comprenant une interface de réception (24) apte à recevoir l'appareil électronique portatif, deux coulisses (23), une première et une deuxième coulisse (23), fixées d'un côté sur la platine et destinées à être fixées de l'autre côté à un élément de l'habitacle du véhicule, de préférence dans une cavité (10) de l'élément de l'habitacle, de manière à permettre un coulissement du support par rapport audit élément de l'habitacle dans une direction X, entre une position escamotée et une position déployée, la première coulisse (23) et la deuxième coulisse (23) s'étendent chacune respectivement dans un premier plan d'extension (P1) et un deuxième plan d'extension (P2),
**caractérise en ce que** les deux plans d'extensions (P1, P2) et les deux coulisses (23) étant sensiblement parallèles à l'axe X, les plans d'extensions (P1, P2) étant non parallèles entre eux.

2. Support (2) suivant la revendication 1 dont les deux coulisses (23) sont disposées dans un même plan parallèle à l'axe X et à un axe Y, l'axe Y étant perpendiculaire à l'axe X, et de manière symétrique par rapport à un plan médian à l'espace entre lesdites deux coulisses (23) et perpendiculaire à l'axe Y, le plan médian étant parallèle à l'axe X et à un axe Z perpendiculaire aux axes X et Y.

3. Support (2) suivant la revendication 2 dont les plans d'extension (P1, P2) forment chacun un angle entre 30° et 40° avec le plan médian.

4. Support (2) suivant l'une des revendications de 2 à 4, **caractérisé en ce que** chacune des coulisses (23) est fixée sur chacun des bords latéraux de la platine (21), les bords latéraux étant les bords disposés de part et d'autre de la platine (21) symétriquement par rapport au plan médian, chacun des bords latéraux comportant au moins une partie parallèle au plan d'extension (P1, P2) de la coulisse (23) fixée sur ledit bord, ladite partie du bord latéral correspondant à la partie sur laquelle est fixée chacune des coulisses (23).

5. Support (2) suivant l'une des revendications précédentes **caractérisées en ce que** le mode propre de la liaison formée par les coulisses (23) est supérieure à 40 Hz.

6. Ensemble (1) pour la fixation d'un appareil électronique portatif dans un véhicule automobile, comprenant un support (2) suivant l'une des revendications précédentes, **caractérisé en ce qu'**il comprend en outre un boîtier support (4) destinée à recevoir l'appareil électronique portatif (5), le boîtier support (4) comprenant une interface de fixation configurée de manière à fixer de manière réversible le boîtier support (4) sur l'interface de réception (24).

7. Planche de bord (1) de véhicule comprenant une cavité (10) débouchant par une ouverture sur la surface extérieure de ladite planche de bord, **caractérisée en ce qu'**elle comporte un support (2) suivant l'une des revendications de 1 à 6 disposé dans la cavité (10) dans une position escamotée et en partie à l'extérieur de la cavité (10) dans une position déployée, le support (2) coulissant pour passer d'une position à l'autre au travers de l'ouverture de la cavité dans la planche de bord.

8. Planche de bord (1) suivant la revendication précédente, **caractérisée en ce que** la cavité (10) est encadrée par des parois entre lesquelles coulisse la platine (21) et les coulisses (23) sont fixées auxdites parois de la cavité (10).

9. Véhicule comportant une planche de bord suivant l'une des revendications 7 ou 8, ou un support suivant l'une des revendications de 1 à 5, ou un ensemble suivant la revendication 6.

## Patentansprüche

1. Bewegliche Halterung (2) zur Befestigung eines tragbaren elektronischen Gerätes (5) in einem Kraftfahrzeug, umfassend eine Platine (21) mit einer Empfangsschnittstelle (24), die zur Aufnahme des tragbaren elektronischen Gerätes geeignet ist, zwei Kulissen (23), eine erste und eine zweite Kulisse (23), die auf einer Seite an der Platine befestigt sind und auf der anderen Seite an einem Teil des Fahrzeuginnenraums befestigt werden sollen, vorzugsweise in einer Ausnehmung (10) des Innenraumelements, um eine Verschiebung der Halterung relativ zu dem Innenraumelement in einer X-Richtung zwischen zu ermöglichen, In einer eingezogenen und einer ausgefahrenen Position erstrecken sich die erste Kulisse (23) und die zweite Kulisse (23) jeweils in einer ersten Ausdehnungsebene (P1) und einer zweiten Ausdehnungsebene (P2), **dadurch gekennzeichnet, dass** die beiden Ausdehnungsebenen (P1, P2) und die beiden Kulissen (23) im Wesentlichen parallel zur X-Achse verlaufen, wobei die Ausdehnungsebenen (P1, P2) nicht parallel zueinander verlaufen.

2. Halter (2) nach Anspruch 1, bei dem die beiden Gleitschienen (23) in einer gleichen Ebene parallel zur X-Achse und zu einer Y-Achse angeordnet sind, wobei die Y-Achse senkrecht zur X-Achse und symmetrisch zu einer Mittelebene des Raums zwischen den beiden Gleitschienen (23) und senkrecht zur Y-Achse ist, wobei die Mittelebene parallel zur X-Achse und zu einer Z-Achse senkrecht zur X- und Y-Achse verläuft.

3. Halter (2) nach Anspruch 2, bei dem die Ausdehnungsebenen (P1, P2) jeweils einen Winkel zwischen 30° und 40° mit der Mittelebene bilden.

4. Träger (2) nach einem der Ansprüche 2 bis 4, **dadurch gekennzeichnet, dass** jede der Kulissen (23) an jeder der Seitenkanten der Platte (21) befestigt ist, wobei die Seitenkanten die zu beiden Seiten der Platte (21) symmetrisch zur Mittelebene angeordneten Kanten sind, wobei jede der Seitenkanten wenigstens einen Teil parallel zur Erstreckungsebene (P1, P2) der Kulisse (23) aufweist, der an der Kante befestigt ist, wobei der Teil der Seitenkante dem Teil entspricht, an dem jede der Kulissen (23) befestigt ist.

5. Träger (2) nach einem der vorhergehenden Ansprüche, **dadurch gekennzeichnet, dass** der Eigenmodus der durch die Kulissen (23) gebildeten Verbindung größer als 40 Hz ist.

6. Anordnung (1) zur Befestigung eines tragbaren elektronischen Gerätes in einem Kraftfahrzeug mit einem Träger (2) nach einem der vorhergehenden Ansprüche, **dadurch gekennzeichnet, dass** sie ferner ein Trägergehäuse (4) zur Aufnahme des tragbaren elektronischen Gerätes (5) aufweist, wobei das Trägergehäuse (4) eine Befestigungsschnittstelle aufweist, die so konfiguriert ist, dass sie das Trägergehäuse (4) reversibel an der Empfangsschnittstelle (24) befestigt.

7. Armaturenbrett (1) für ein Fahrzeug, das eine Ausnehmung (10) aufweist, die durch eine Öffnung an der Außenfläche des Armaturenbretts mündet, **dadurch gekennzeichnet, dass** es einen Träger (2) nach einem der Ansprüche 1 bis 6 aufweist, der in der Ausnehmung (10) in einer eingezogenen Position und teilweise außerhalb der Ausnehmung (10) in einer ausgefahrenen Position angeordnet ist, wobei der Träger (2) verschiebbar ist, um von einer Position in die andere durch die Ausnehmung in dem Armaturenbrett hindurch zu gehen.

8. Armaturenbrett (1) nach dem vorhergehenden Anspruch, **dadurch gekennzeichnet, dass** der Hohlraum (10) von Wänden umgeben ist, zwischen denen die Platte (21) und die Kulissen (23) an den Wänden des Hohlraums (10) befestigt sind.

9. Fahrzeug mit einem Armaturenbrett nach einem der Ansprüche 7 oder 8 oder einem Träger nach einem der Ansprüche 1 bis 5 oder einer Anordnung nach Anspruch 6.

## Claims

1. A movable support (2) for fixing a portable electronic apparatus (5) in a motor vehicle, comprising a plate (21) comprising a receiving interface (24) adapted to receive the portable electronic apparatus, two slides (23), a first and a second slide (23), fixed on one side to the plate and intended to be fixed on the other side to an element of the passenger compartment of the vehicle, preferably in a cavity (10) of the element of the passenger compartment, so as to allow sliding of the support with respect to said element of the passenger compartment in an X direction, between a retracted position The first slide (23) and the second slide (23) extend respectively in a first extension plane (P1) and a second extension plane (P2), in a deployed position, **characterized in that** the two extension planes (P1, P2) and the two slides (23) are substantially parallel to the X axis, the extension planes (P1, P2) being not parallel to each other.

2. Support (2) according to claim 1, the two slides (23) of which are arranged in the same plane parallel to the axis X and to an axis Y, the axis Y being perpendicular to the axis X, and symmetrically with respect to a plane midway through the space between said two slides (23) and perpendicular to the axis Y, the median plane being parallel to the axis X and to an axis Z perpendicular to the axes X and Y.

3. Support (2) according to claim 2, the extension planes (P1, P2) of which each form an angle between 30° and 40° with the median plane.

4. Support (2) according to one of claims 2 to 4, **characterized in that** each of the slides (23) is fixed to each of the lateral edges of the plate (21), the lateral edges being the edges arranged on either side of the plate (21) symmetrically with respect to the median plane, each of the lateral edges comprising at least one part parallel to the extension plane (P1, P2) of the slide (23) fixed to the said edge, the said part of the lateral edge corresponding to the part to which each of the slides (23) is fixed.

5. Support (2) according to one of the preceding claims, **characterized in that** the natural mode of the connection formed by the slides (23) is greater than 40 Hz.

6. Assembly (1) for fixing a portable electronic apparatus in a motor vehicle, comprising a support (2) according to one of the preceding claims, **characterized in that** it further comprises a support housing (4) intended to receive the portable electronic apparatus (5), the support housing (4) comprising a fixing interface configured so as to fix the support housing (4) reversibly on the reception interface (24).

7. Vehicle dashboard (1) comprising a cavity (10) opening through an opening onto the outer surface of said dashboard, **characterized in that** it comprises a support (2) according to one of claims 1 to 6 arranged in the cavity (10) in a retracted position and partly outside the cavity (10) in a deployed position, the support (2) sliding from one position to the other through the opening of the cavity in the dashboard.

8. Dashboard (1) according to the preceding claim, **characterized in that** the cavity (10) is surrounded by walls between which the dashboard (21) slides and the slides (23) are fixed to said walls of the cavity (10).

9. Vehicle comprising a dashboard according to one of claims 7 or 8, or a support according to one of claims 1 to 5, or an assembly according to claim 6.
